# EUROPÄISCHE PATENTANMELDUNG

(11) **EP 1 304 460 A2**
(43) Veröffentlichungstag der Anmeldung: **23.04.2003**
(21) Anmeldenummer: 02020723.9
(22) Anmeldetag: 14.09.2002
(51) Int. Cl.: F02B 1/04, F02B 23/10, F02F 3/26

(54) **Brennverfahren für eine direkteinspritzende fremdgezündete Brennkraftmaschine**

(30) Priorität: 18.10.2001 DE 10151483
(71) Anmelder: Bayerische Motoren Werke Aktiengesellschaft, 80809 München (DE)
(72) Erfinder: Hoss, Bernhard, 82131 Gauting (DE); Neugebauer, Stephan, Dr., 82441 Ohlstadt (DE); Albrecht, Thomas, 80796 München (DE)

(57) **Zusammenfassung**

Für ein Brennverfahren einer direkteinspritzenden, fremdgezündeten Brennkraftmaschine, bei dem je ventilgesteuertem Zylinder mit einer schwachen Drallströmung eine durch Kraftstoff-Einspritzung in der Verbrennungsluft gebildete Gemischwolke im wesentlichen mittels einer Mulde in einem hubbeweglichen Kolben über die Kolbenhubbewegung in Richtung OT einer in einem Zylinderkopf angeordneten Zündeinrichtung zugeführt wird, wird zur Vermeidung einer Wandanlagerung von Kraftstoff in der Mulde aus der zur Zündeinrichtung transportierten Gemischwolke vorgeschlagen, dass diese mittels einer Mehrloch-Einspritzdüse durch mehrere Einspritzstrahlen mit jeweils großem Impuls aus einem in der Verbrennungsluft doppelkegelförmig geformten Spritzkegel gebildet ist, der zur Zylinderachse relativ steil geneigt über eine freie Flugstrecke in der Mulde des in Richtung OT sich bewegenden Kolbens platziert wird, wobei der in der Verbrennungsluft doppelkegelförmig ausgebildete Spritzkegel in seinem freien Ende beim Auftreffen in der Kolben-Mulde in sich zurückgeworfen wird zur weiteren Aufbereitung der Gemischwolke.

## Beschreibung

Die Erfindung bezieht sich nach dem Oberbegriff des Patentanspruches 1 auf ein Brennverfahren für eine direkteinspritzende, fremdgezündete Brennkraftmaschine, bei dem je ventilgesteuertem Zylinder mit einer Drallströmung eine durch Kraftstoff-Einspritzung in die Verbrennungsluft gebildete Gemischwolke im wesentlichen mittels einer Mulde in einem hubbeweglichen Kolben über die Kobenhubbewegung in Richtung OT einer in einem Zylinderkopf angeordneten Zündeinrichtung zugeführt wird.

Aus der deutschen Patentanmeldung DE 199 20 735 A1 ist eine Brennkraftmaschine bekannt, bei der ein Otto-Kraftstoff aus einem Kraftstoffeinspritzventil mit zur Kolbenachse im wesentlichen paralleler Achse direkt in die Mulde des unter dem Kraftstoffeinspritzventil angeordneten Kolbens eingespritzt wird, wobei ein Luft-Benzin-Gemisch in der Mulde einen vertikalen Wirbel ausbildet, wodurch das Gemisch aus verdampftem Benzin und Luft in einem gut geschichteten Zustand in der Mulde gehalten wird. Da die Mulde in dem der Zündkerze entsprechenden Bereich tiefer ausgebildet ist als in dem dem Kraftstoffeinspritzventil entsprechenden Bereich, wird das brennfähige Gemisch über eine längere Zeitdauer in der Mulde gehalten, so dass sich durch ein gewöhnliches Zündsystem eine stabile Zündung erreichen lässt. Der Vorteil dieser Anordnung wird darin gesehen, das sich in weiten Drehzahl- und Lastbereichen des Motors eine stabile Mager-Schichtverbrennung bei reduziertem Kraftstoffverbrauch ergibt.

Mit dem direkt in die Kolben-Mulde eingespritzten Kraftstoff wird dieser in nicht unerheblichem Umfang an die Mulde wandangelagert, wodurch einerseits bei ungenügender Ladungsbewegung die Verbrennung mit einer Ruß- und HC-Bildung verbunden ist und andererseits eine hohe, erforderliche Ladungsbewegung den Liefergrad der Brennkraftmaschine insbesondere an der Vollast ungünstig beeinflusst.

Der Erfindung liegt die Aufgabe zugrunde, das gattungsgemäße Brennverfahren derart zu verbessern, dass bei einer über die Kolben-Mulde zu einer Zündeinrichtung transportierten Gemischwolke eine Wandanlagerung im wesentlichen vermieden ist.

Diese Aufgabe ist mit dem Patentanspruch 1 dadurch gelöst, dass ein mittels einer Mehrloch-Einspritzdüse durch mehrere Einspritzstrahlen mit jeweils relativ großem Impuls gebildeter und in der Verbrennungsluft doppelkegelförmig geformter Spritzkegel mit einem düsenseitigen Öffnungskegelwinkel von 35° bis 55° im Magerbetrieb der Brennkraftmaschine bis in den oberen Teillastbereich im Zylinder derart relativ steil in die Kolben-Mulde gerichtet wird, dass der wesentliche Teil des bei einer Kolbenstellung im Bereich von 90° bis 35° eingebrachten Spritzkegels als strahlgeführt erzeugte Gemischwolke in der Mulde verbleibt, wobei zufolge des Impulses ein wesentlicher Anteil des in der Mulde auftreffenden Spitzen- bzw. Kopfkegels des doppelkegelförmigen Spritzkegels in sich derart zurückgeworfen wird, dass die Gemischwolke im wesentlichen unter Vermeidung einer Wandanlagerung in der Mulde verbleibend der Zündeinrichtung zugeführt wird und während dieser Zuführung durch eine Drallströmung mit einer Drallzahl < 2,5 im Zylinder Verbrennungsluft in die Mulde einströmt.

Im Gegensatz zum gattungsbildenden Stand der Technik, bei dem die Gemischwolke durch Aufspritzen eines Kraftstoffstrahles auf den Boden der Mulde des nahe bei OT befindlichen Kolbens initiiert wird, erfolgt bei dem erfindungsgemäßen Brennverfahren die Bildung der Gemischwolke mittels einer per se bekannten Mehrlochdüse in der Weise, dass durch eine einen im Umfang im wesentlichen geschlossenen Spritzkegel bildende Anzahl von Einspritzstrahlen von jeweils großem Impuls eine den Kraftstoff sehr fein zerstäubt und mit Verbrennungsluft vermischt enthaltende Gemischwolke im freien Flug durch den Zylinderraum in Richtung der Kolben-Mulde befördert wird. Durch den großen Impuls des Spritzkegels wird dieser zudem durch benachbarte Verbrennungsluft zu einer doppelkegelförmigen bzw. flammenförmigen Gestalt geformt mit dem Vorteil, dass der in der Mulde des gegen OT bewegten Kolbens auftreffende Spitzen- bzw. Kopfkegel des Spritzkegels in sich zurückgeworfen wird, wobei derart reflektierte Kraftstofftröpfchen mit dem bereits im Spritzkegel verdampften Kraftstoff eine zündfähige Gemischwolke bilden.

Weiter wird mit dem zur Zylinderachse geneigt gerichtet ausgebildeten Spritzkegel in vorteilhafterweise ein längerer Flugweg der Gemischwolke erzielt, wodurch die Ausbildung der doppelkegelförmigen bzw. flammenförmigen, strahlgeführt erzeugten Gemischwolke zusätzlich unterstützt ist und damit ferner die erheblich aufbereitete Gemischwolke mit einem gegenüber dem Spitzenkegelkern im Außenbereich ausreichend zündfähig fetten Kraftstoffanteil in kompakter Gestalt in die Mulde eingebracht ist.

Mit der weitestgehend aufbereiteten Gemischwolke von kompakter Gestalt wird feinstverteilter Kraftstoff von der temperierten Mulde sofort verdampft und damit die Gemischbildung zumindest lokal zusätzlich unterstützt, so dass in weiterer vorteilhafter Weise eine Wandanlagerung vermieden ist. Weiter ist die Ausbildung einer kompakten Gemischwolke zur ausschließlichen Platzierung in der Kolben-Mulde auch durch eine relativ schwache Drallströmung im Zylinder unterstützt, die mit zunehmender Annäherung des Kolbens an den OT in die Mulde einströmt und der weiteren Durchmischung der Gemischwolke nach einer mittels der Zündeinrichtung ausgelösten Verbrennung dient.

Mit dem erfindungsgemäßen Brennverfahren ergibt sich aus einem vorteilhaft großen Spritzbereich von 90° bis 35° Kolbenstellung vor OT bis zum Zündzeitpunkt eine extrem großes Betriebsfenster, wobei als weiterer Vorteil ein großer Zündwinkelbereich hinzukommt. In der Summe ergibt sich eine stabile Verbrennung bzw. ein stabiler Betrieb der Brennkraftmaschine bei erheblich reduzierten HC- und Ruß-Emissionen. Als weiterer Vorteil ist eine über einen großen Last- und Drehzahlbereich stabile Ladungsschichtung zu nennen mit einer großen Robustheit gegenüber Bauteilstreuungen und geringer Empfindlichkeit gegenüber Bauteilauslegungen

Aufgrund der reduzierten Drallströmung ist weiter das Vollastverhalten durch einen hohen Liefergrad vorteilhaft. Ferner sind durch die geringeren Rohemissionen auch die Vorrichtungen zur Abgasnachbehandlung vorteilhaft auszubilden.

In Unteransprüchen sind vorteilhafte Gestaltungsmerkmale einer Brennkraftmaschine zur Durchführung des Brennverfahrens angegeben.

Die Erfindung ist anhand eines in der Zeichnung schematisch dargestellten Brennraum-Zylinders einer Brennkraftmaschine beschrieben. Es zeigt:
- Fig. 1: einen Brennraum-Zylinder mit Kolben in schematischer Darstellung,
- Fig. 2: den Kolben in Draufsicht mit einer Mulde.

Bei einem Brennverfahren für eine direkteinspritzende, fremdgezündete Brennkraftmaschine wird je ventilgesteuertem Zylinder 1 mit einer Drallströmung eine durch Kraftstoffeinspritzung 2 in die Verbrennungsluft gebildete Gemischwolke im wesentlichen mittels einer Mulde 3 in einem hubbeweglichen Kolben 4 über die Kolbenhubbewegung in Richtung OT einer in einem Zylinderkopf 5 angeordneten Zündeinrichtung 6 zugeführt.

Um bei einer durch eine Einspritzung in der Kolben-Mulde 3 platzierten Gemischwolke eine nachteilige Wandanlagerung zu vermeiden, wird erfindungsgemäß für das Brennverfahren vorgeschlagen, dass ein mittels einer Mehrloch-Einspritzdüse 7 durch mehrere Einspritzstrahlen mit jeweils relativ großem Impuls gebildeter und in der Verbrennungsluft doppelkegelförmig geformter Spritzkegel 2' mit einem düsenseitigen Öffnungskegelwinkel von 35° bis 55° im Magerbetrieb der Brennkraftmaschine bis in den oberen Teillastbereich im Zylinder 1 derart relativ steil in die Kolben-Mulde 3 gerichtet wird, dass der wesentliche Teil des bei einer Kolbenstellung im Bereich von 90° bis 35° eingebrachten Spritzkegels 2' als strahlgeführt erzeugte Gemischwolke in der Mulde 3 verbleibt, wobei zufolge des Impulses ein wesentlicher Anteil des in der Mulde 3 auftreffenden Spitzen- bzw. Kopfkegels 2" des doppelkegelförmigen Spritzkegels 2' in sich derart zurückgeworfen wird, dass die Gemischwolke im wesentlichen unter Vermeidung einer Wandanlagerung in der Mulde 3 verbleibend der Zündeinrichtung 6 zugeführt wird und während dieser Zuführung durch eine Drallströmung mit einer Drallzahl < 2,5 im Zylinder 1 Verbrennungsluft in die Mulde 3 einströmt.

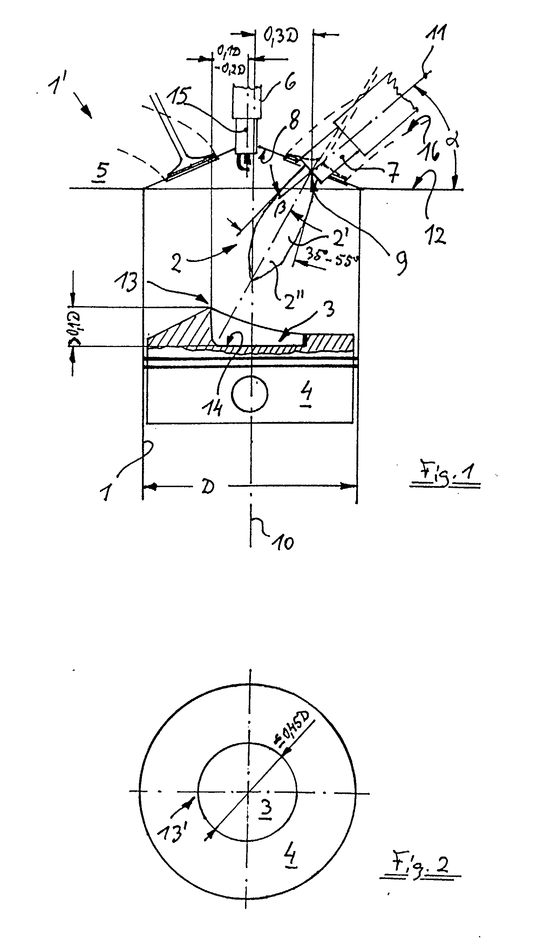

Zur Durchführung des erfindungsgemäßen Brennverfahrens bei einer Brennkraftmaschine 1' wird mit Bezug auf Fig. 1 vorgeschlagen, dass die Mehrloch-Einspritzdüse 7 in einem Zylinderkopf 5 mit einem Dachbrennraum 8 einlassventilseitig relativ zum Zylinder 1 mit einem Durchmesser D = 60- 100 mm derart angeordnet ist, dass der Durchstoßpunkt der Achse 9 der Mehrloch-Einspritzdüse 7 von der Zylinderachse 10 um den Betrag von mindestens 0,3 D entfernt ist und die Einspritzdüsen-Achse 11 mit einer gehäuseseitigen Anschlussfläche 12 des Zylinderkopfes 5 einen Winkel α = 15° bis 40° einschließt, und ferner der aus mindestens sechs Einspritzstrahlen der Mehrloch-Einspritzdüse 7 gebildete Spritzkegel 2' relativ zur Einspritzdüsen-Achse 11 um einen Winkel β = 5° bis 20° steiler zur Kolben-Mulde 3 gerichtet ist.

Wie aus Fig. 2 ersichtlich, ist die Kolben-Mulde 3 etwa von kreisförmiger Gestalt bei einem Durchmesser von ≤ 0,45 D, wobei eine auslassventilseitig erhöhte Mulden-Begrenzung 13 eine Höhe über dem im wesentlichen ebenen Muldenboden 14 von 0,1 D aufweist und weiter die Mulden-Begrenzung 13 im Scheitel bei 13' von einer Mittelachse 15 der im Bereich der Zylindermitte angeordneten Zündeinrichtung 6 - in Projektion gesehen - um 0,1 D bis 0,2 D entfernt angeordnet ist. Wie aus Fig. 2 weiter ersichtlich, ist die Mulde 3 im Kolben 4 im wesentlichen symmetrisch angeordnet. Zu dieser Kolben-Mulde 3 ist im weiteren die Mehrloch-Einspritzdüse 7 im Zylinderkopf 5 zwischen zwei ventilgesteuerten Einlasskanälen 16 etwa mittig angeordnet.

In einer Abwandlung der Erfindung weist eine nicht gezeigte Mehrloch-Einspritzdüse ein gesondertes, auf die Zündeinrichtung 6 gerichtetes Spritzloch auf. Damit kann um die Zündeinrichtung 6 ein fettes, zündfähiges Gemisch ausgebildet werden, wogegen in der Kolben-Mulde 3 eine um diesen Kraftstoffanteil verringerte, magere Gemischwolke platziert wird mit nochmals reduzierter Wandanlagerung.

## Patentansprüche

1. Brennverfahren für eine direkteinspritzende, fremdgezündete Brennkraftmaschine,
- bei dem je ventilgesteuertem Zylinder (1) mit einer Drallströmung eine durch Kraftstoff-Einspritzung (2) in die Verbrennungsluft gebildete Gemischwolke im wesentlichen mittels einer Mulde (3) in einem hubbeweglichen Kolben (4) über die Kolbenhubbewegung in Richtung OT einer in einem Zylinderkopf (5) angeordneten Zündeinrichtung (6) zugeführt wird,
**dadurch gekennzeichnet,**
- **dass** ein mittels einer Mehrloch-Einspritzdüse (7) durch mehrere Einspritzstrahlen mit jeweils relativ großem Impuls gebildeter und in der Verbrennungsluft doppelkegelförmig geformter Spritzkegel (2") mit einem düsenseitigen Öffnungskegelwinkel von 35° bis 55° im Magerbetrieb der Brennkraftmaschine (1') bis in den oberen Teillastbereich im Zylinder (1) derart relativ steil in die Kolben-Mulde (3) gerichtet wird,
- **dass** der wesentliche Teil des bei einer Kolbenstellung im Bereich von 90° bis 35° eingebrachten Spritzkegels (2') als strahlgeführt erzeugte Gemischwolke in der Mulde (3) verbleibt, wobei
- zufolge des Impulses ein wesentlicher Anteil des in der Mulde (3) auftreffenden Spitzen- bzw. Kopfkegels (2") des doppelkegelförmigen Spritzkegels (2') in sich derart zurückgeworfen wird, dass
- die Gemischwolke im wesentlichen unter Vermeidung einer Wandanlagerung in der Mulde (3) verbleibend der Zündeinrichtung (6) zugeführt wird, und
- während dieser Zuführung durch eine Drallströmung mit einer Drallzahl < 2,5 im Zylinder (1) Verbrennungsluft in die Mulde (3) einströmt.

2. Brennkraftmaschine zur Durchführung des Brennverfahrens nach Anspruch 1, **dadurch gekennzeichnet,**
- **dass** die Mehrloch-Einspritzdüse (7) in einem Zylinderkopf (5) mit einem Dachbrennraum (8) einlassventilseitig relativ zum Zylinder (1) mit einem Durchmesser D = 60- 100 mm derart angeordnet ist, dass der
- Durchstoßpunkt der Achse (9) der Mehrloch-Einspritzdüse (7) von der Zylinder-Achse (10) um den Betrag von mindestens 0,3 D entfernt ist und die Einspritzdüsen-Achse (11) mit einer gehäuseseitigen Anschlussfläche (12) des Zylinderkopfes (5) einen Winkel α = 15° - 40° einschließt, und ferner
- der aus mindestens sechs Einspritzstrahlen der Mehrloch-Einspritzdüse (7) gebildete Spritzkegel (2') relativ zur Einspritzdüsen-Achse (11) um einen Winkel β = 5° - 20° steiler zur Kolben-Mulde (3) gerichtet ist.

3. Brennkraftmaschine nach Anspruch 2, **dadurch gekennzeichnet,**
- **dass** die Kolben-Mulde (3) etwa von kreisförmiger Gestalt ist mit einem Durchmesser von ≤ 0,45 D, wobei
- eine auslassventilseitig erhöhte Mulden-Begrenzung (13) eine Höhe über dem im wesentlichen ebenen Muldenboden (14) von 0,1 D aufweist und weiter
- die Mulden-Begrenzung (13) im Scheitel (bei 13') von einer Mittelachse (15) der im Bereich der Zylindermitte angeordneten Zündeinrichtung (6) - in Projektion gesehen - um 0,1 D bis 0,2 D entfernt angeordnet ist.

4. Brennkraftmaschine nach den Ansprüchen 2 und 3, **dadurch gekennzeichnet, dass** die Mehrloch-Einspritzdüse (7) im Zylinderkopf (5) zwischen zwei ventilgesteuerten Einlasskanälen (16) etwa mittig angeordnet ist.

5. Brennkraftmaschine nach einem oder mehreren der Ansprüche 1 bis 4, **dadurch gekennzeichnet, dass** eine Mehrloch-Einspritzdüse ein gesondertes, auf die Zündeinrichtung (6) gerichtetes Spritzloch aufweist.
